# EUROPEAN PATENT APPLICATION

(11) **EP 4 644 282 A1**
(43) Date of publication of application: **05.11.2025**
(21) Application number: 25170325.2
(22) Date of filing: 14.04.2025
(51) Int. Cl.: B65B 61/20, B25J 9/02, B65B 57/14

(54) **GADGET DISPENSING APPARATUS FOR A PACKAGING PLANT AND METHOD FOR REORDERING AT LEAST ONE GADGET FOR A GADGET DISPENSING APPARATUS**

(30) Priority: 30.04.2024 IT 202400009784
(71) Applicant: MBP S.r.l., 46043 Castiglione delle Stiviere (Mantova) (IT)
(72) Inventor: PAVAN, Marco, 46043 Castiglione delle Stiviere (Mantova) (IT); LANZUTTI, Albano, 46043 Castiglione delle Stiviere (Mantova) (IT); FIORAVANTI, Andrea, 46043 Castiglione delle Stiviere (Mantova) (IT)
(74) Representative: Locatelli, Gian Matteo

(57) **Abstract**

A gadget dispensing apparatus (10) for a packaging plant (100) comprising movement means (11) configured to move at least one gadget between a pick-up station (12) and a release station (13) and at least one gripping head (16) connected to the movement means (11) and activatable on the at least one gadget for binding the at least one gadget to the movement means (11). The dispensing apparatus (10) further comprises detection means (17), active on said gripping head (16), configured to generate at least one quantity signal representative of at least the quantity of gadgets bound to the at least one gripping head (16) and a control unit operatively associated with the detection means (17) for controlling the movement means (11) and/or the at least one gripping head (16) at least as a function of the at least one quantity signal.

## Description

The present invention relates to a gadget dispensing apparatus for a packaging plant and a method for reordering at least one gadget for a gadget dispensing apparatus.

Hence, the present invention finds a wide field of application in the field of packaging plants for products of various kinds in which, in addition to inserting the product, gadgets are inserted, too.

Nowadays, the practice of introducing gadgets of various kinds (for example, cards, key rings and the like) into the package of a product for generally promotional and/or advertising purposes is widely used.

The introduction of the gadget inside the product package was initially carried out by an operator assigned to this task. The subsequent appearance of some specialized machines made it possible to limit the intervention of operators by making this operation at least partially automated.

However, the aforementioned machines suffer from a multitude of problems that limit the efficiency of the packaging process.

In fact, it may happen that the gadget is released from the machine before reaching its destination or that the machine cannot pick up and/or release the gadget, thus resulting in the gadget being absent inside the package. Disadvantageously, moreover, it very often occurs that the machines intercept an incorrect number of gadgets and, therefore, introduce an incorrect quantity thereof into the package, obviously leading to an increase in costs.

In this context, the technical task underlying the present invention is to propose a gadget dispensing apparatus for a packaging plant and a method for reordering at least one gadget for a gadget dispensing apparatus that overcome the aforementioned drawbacks of the prior art.

In particular, it is an object of the present invention to provide a gadget dispensing apparatus for a packaging plant and a method for reordering at least one gadget for a gadget dispensing apparatus capable of increasing the efficiency of the packaging process.

Another object of the present invention is to provide a gadget dispensing apparatus for a packaging plant and a method for reordering at least one gadget for a gadget dispensing apparatus having increased accuracy.

A further object of the present invention is to provide a gadget dispensing apparatus for a packaging plant and a method for reordering at least one gadget for a gadget dispensing apparatus having increased reliability compared to the solutions of the prior art.

The technical task mentioned and the objects stated are substantially achieved by a gadget dispensing apparatus for a packaging plant and a method for reordering at least one gadget for a gadget dispensing apparatus comprising the technical features set out in one or more of the appended claims.

The dependent claims correspond to possible embodiments of the invention.

Additional features and advantages of the present invention will emerge more clearly from the approximate and thus non-limiting description of a preferred but not exclusive embodiment of a gadget dispensing apparatus for a packaging plant and a method for rearranging at least one gadget for a gadget dispensing apparatus as illustrated in the attached drawings in which:
- figure 1 is a perspective representation of a gadget dispensing apparatus for a packaging plant in accordance with a possible embodiment of the present invention;
- figure 2 is a perspective view of a portion of the gadget dispensing apparatus for a packaging plant of figure 1;
- figures 3-4 are exploded views of respective portions of the gadget dispensing apparatus for a packaging plant of figure 1;

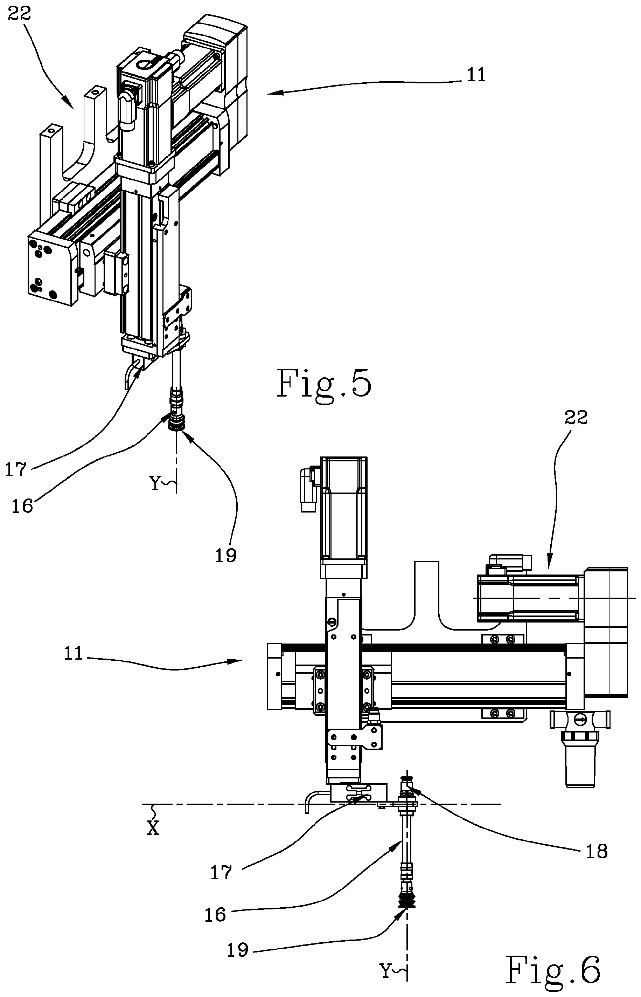

- figures 5-6 are views in accordance with respective angles of a portion of the gadget dispensing apparatus for a packaging plant of figure 1.

With reference to the attached figures, a gadget dispensing apparatus for a packaging plant has been indicated overall with reference numeral 10, which will be reported below as dispensing apparatus 10.

The dispensing apparatus 10 comprises movement means 11 configured to move the at least one gadget (not illustrated in the attached figures) between a pick-up station 12 and a release station 13.

For example, the at least one gadget may be fed to the pick-up station 12 by a feeding conveyor 101 of the packaging plant 100. In addition, the release station 13 can be facing and/or be operatively associated with a packing conveyor 102, for example equipped with flights to guarantee an increased efficiency of movement of the at least one gadget, of the packaging plant 100 adapted to convey the at least one gadget released in the release station 13 towards a packing station of the packaging plant 100.

The dispensing apparatus 10 comprises at least one gripping head 16 connected to the movement means 11.

Preferably, the at least one gripping head 16 is at least partially moved by the movement means 11.

In particular, the at least one gripping head 16 is activatable on the at least one gadget for binding the at least one gadget to the movement means 11 at least during a movement between the pick-up station 12 and the release station 13.

In other words, the at least one gripping head 16 is operatively associated with the movement means 11 for picking up at least one gadget from the pick-up station 12 and for releasing the at least one gadget into the release station 13.

In accordance with some possible embodiments of the present invention and as illustrated in the attached figures, the dispensing apparatus 10 may comprise a plurality of gripping heads 16 operatively connected to the movement means 11 in such a way as to allow the simultaneous picking up and/or release and/or in accordance with preset intervals of an increased number of gadgets. In particular, the movement means 11 can be configured to autonomously and independently move each gripping head 16.

Advantageously, the dispensing apparatus 10 comprises detection means 17 active on the gripping head 16 and configured to generate at least one quantity signal representative of at least the quantity of gadgets bound to the at least one gripping head 16 in such a way as to allow an accurate recognition of the number of gadgets bound to the at least one gripping head 16.

Preferably, the detection means 17 is active on each gripping head 16 for generating a respective plurality of quantity signals.

In particular, the detection means 17 can be configured to allow an accurate recognition of the number of gadgets bound to each gripping head 16.

Furthermore, the dispensing apparatus 10 comprises a control unit operatively associated with the detection means 17. The control unit is configured to control the movement means 11 and/or the at least one gripping head 16 at least as a function of the at least one quantity signal of the aforementioned detection means 17.

In this way, the present invention guarantees the movement between the pick-up station 12 and the release station 13 of the exact number of gadgets, preventing an incorrect quantity of gadgets from reaching the release station 13 and, therefore, from being packed, for example, at the packing station of the packaging plant 100. In particular, the packing station of the packaging plant 100 is generally arranged downstream of the dispensing apparatus 10. In other words, the present invention allows to increase the precision in the distribution of the number of gadgets towards the packing station of the packaging plant 100.

For example, the control unit can verify that the quantity signal corresponds to a preset signal, indicative of a predetermined quantity of gadgets, and controls the movement means 11 and/or the at least one gripping head 16 in such a way that, in the event of a mismatch, the gadgets are released at the pick-up station 12 and/or are not released at the release station 13.

In this way, the control unit limits the movements that are not suitable for the correct distribution of the gadgets by the movement means 11 and/or of the at least one gripping head 16, for example movements in which the quantity signal does not correspond to the preset signal, in such a way as to increase efficiency and reduce operating costs.

Purely by way of non-limiting example, the control unit can be configured such that the predetermined quantity of gadgets corresponds to a single gadget and, therefore, to control the movement means 11 and/or the at least one gripping head 16 such that only one gadget is bound to each gripping head 16 during the movement from the pick-up station 12 to the release station 13.

Advantageously, the at least one gripping head 16 can be reversibly switchable between an active configuration, in which it binds the at least one gadget to the movement means 11, and an inactive configuration in which it does not bind the at least one gadget to the movement means 11. In particular, the control unit may be configured to switch the gripping head 16 from the active configuration to the inactive configuration as a function of the at least one quantity signal.

For example, the control unit may be activated on the at least one gripping head 16 by commanding the release of the at least one gadget inside the pick-up station 12 to prevent an incorrect quantity of gadgets from being released in the release station 13.

Purely by way of non-limiting example, the control unit can be activated on the at least one gripping head 16 by commanding the release of the at least one gadget inside the pick-up station 12 if the quantity of gadget detected is greater than a single gadget.

Preferably, the detection means 17 comprises at least one load cell active on the at least one gripping head 16 for generating the at least one quantity signal. For example, the load cell may detect the weight of the at least one gadget by allowing the control unit to determine the exact quantity of gadgets bound to the gripping head 16 as a function of the detected weight.

In particular, the load cell can be arranged near the gripping head 16 so that an accurate detection of the weight of the at least one gadget is guaranteed.

Purely by way of non-limiting example, the load cell can be at least partially interposed between the gripping head 16 and the movement means 11 for jointly detecting the weight of the gripping head 16 and the at least one gadget.

Preferably, the detection means 17 comprises a plurality of load cells each of which is active or activatable on a respective gripping head 16.

According to a further advantageous aspect, the dispensing apparatus 10 may comprise pneumatic means 18 operatively associated with the at least one gripping head 16 for binding the at least one gadget to the movement means 11. In particular, the at least one gripping head 16 may comprise at least one activation body 19, preferably a suction cup body, in fluid communication with the pneumatic means 18 and configured to bind the at least one gadget to the at least one gripping head 16 under the action of the pneumatic means 18. In other words, the pneumatic means 18 can promote a suction action adapted to bind the at least one gadget to the activation body 19.

Preferably, the dispensing apparatus 10 may comprise at least one pressure sensor (not illustrated in the attached figures) active on the pneumatic means 18 and/or on the activation body 19 and configured to generate at least one presence signal representative of the presence of at least one gadget bound to the at least one gripping head 16. For example, the pressure sensor may be configured to detect the pressure at the pneumatic means 18 and/or the activation body 19 and the control unit may be configured to determine the presence of at least one gadget bound to the gripping head 16 as a function of the detected pressure. Furthermore, the control unit can be associated with the at least one pressure sensor for controlling the movement means 11 and/or the at least one gripping head 16 at least as a function of the at least one presence signal.

For example, the control unit can be activated on the movement means 11 preventing the movement means 11 from performing the aforementioned movement between the pick-up station 12 and the release station 13 if the at least one pressure sensor does not detect any gadget bound to the at least one gripping head 16 helping to increase the efficiency of the packaging process. Furthermore, the control unit can be activated on the movement means 11 so that the gripping head 16 is returned near the pick-up station 12 to try and pick up again at least one gadget of the pick-up station 12 if the at least one pressure sensor does not detect any gadget bound to the at least one gripping head 16.

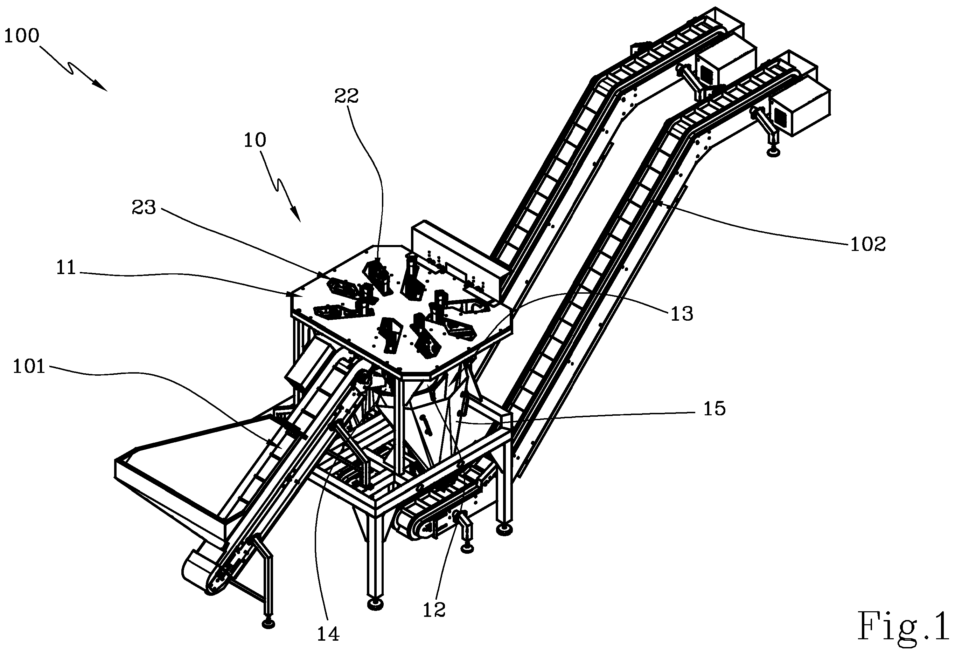

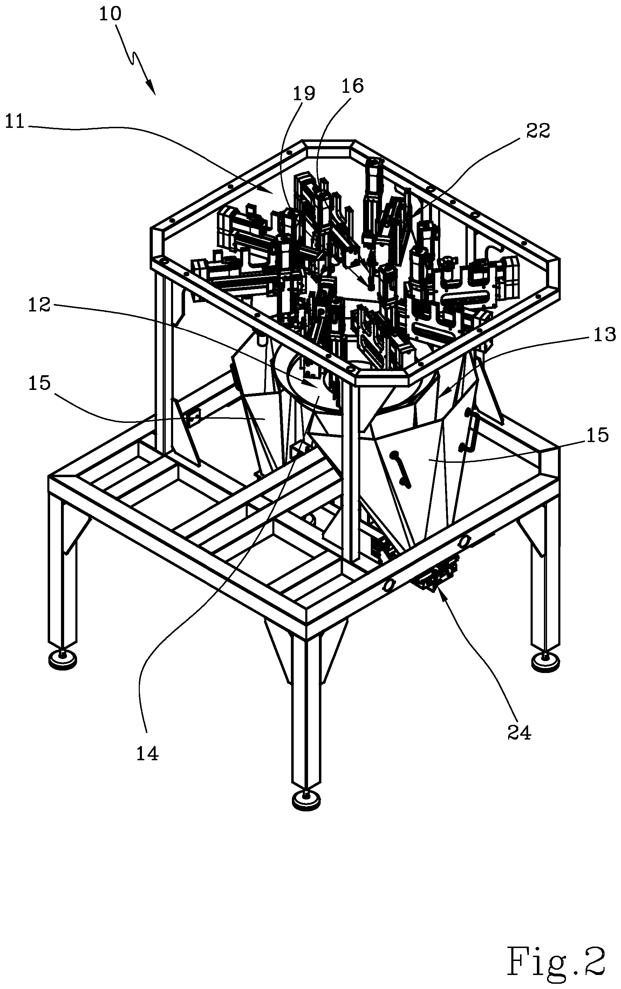

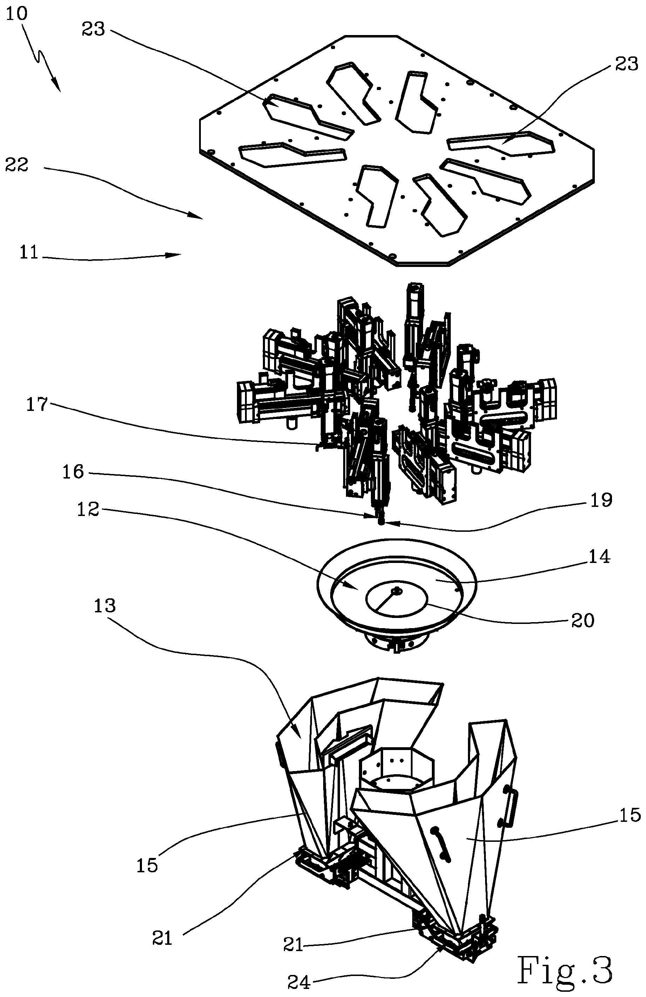

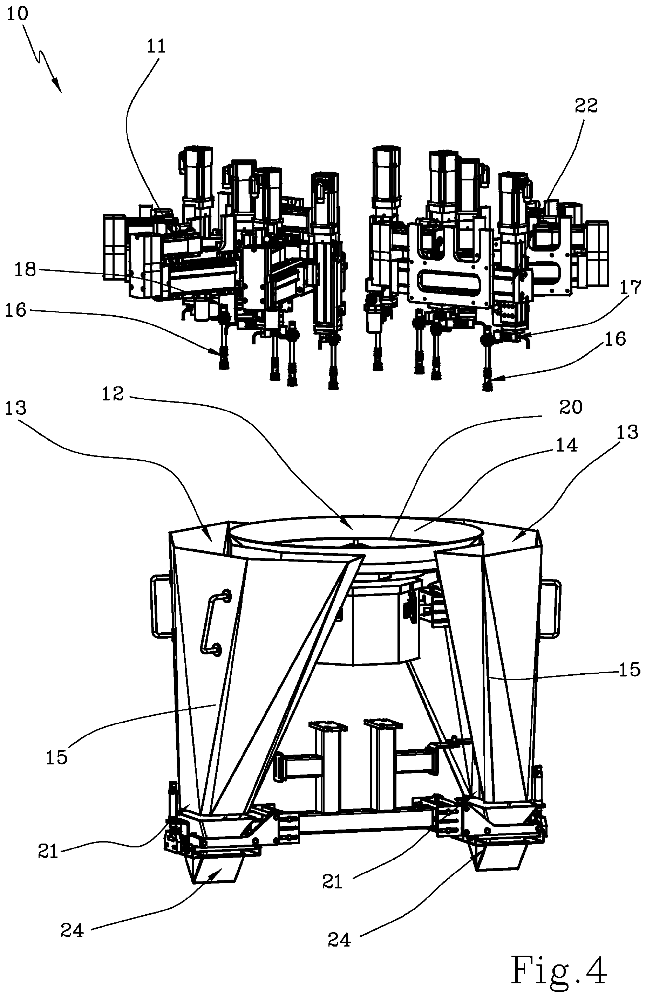

In accordance with some possible embodiments of the present invention and with particular reference to figures 1-4, the dispensing apparatus 10 may comprise at least one support body 14 adapted to support at least one gadget. In particular, the support body 14 can at least partially define the at least one pick-up station 12.

For example, the support body 14 may comprise a vibrating plate 20 adapted to support at least one gadget, preferably a plurality of gadgets. In particular, the dispensing apparatus 10 may comprise one or more optical sensors or the like (not illustrated in the attached figures) adapted to detect the presence of at least one gadget on the support body 14 and operatively associated with the control unit, for example, at least to signal the need to feed at least one gadget to the support body 14.

Furthermore, the dispensing apparatus 10 may comprise at least one hopper 15 adapted to convey the at least one gadget towards a rephasing system and/or a conveying system and/or a packing system of a packaging plant. In particular, the at least one hopper 15 may at least partially define the at least one release station 13. Preferably, the at least one hopper 15 can be arranged perimetrically, even more preferably circumferentially, to the support body 14. For example, the dispensing apparatus 10 may comprise a pair of hoppers 15 operatively associated to define the release station 13.

Purely by way of non-limiting example, the hopper 15 may have a lower portion 21 facing the packing conveyor 102. For example, the lower portion 21 may comprise a discharge opening facing the packing conveyor and the dispensing apparatus 10 may comprise automated opening means 24 active on the discharge opening to allow an effective release, for example synchronized with the packing conveyor 102, of the gadget on the packing conveyor 102.

In accordance with an advantageous aspect, the movement means 11 can be configured to move the at least one gripping head 16 at least along a first movement direction "Y", preferably a vertical direction, and at least a second movement direction "X", preferably a horizontal direction.

For example, the movement means 11 can be configured to move the at least one gripping head 16 towards and/or away from the pick-up station 12 along the first movement direction "Y" to pick up the at least one gadget and/or to move the at least one gripping head 16 between the pick-up station 12 and the release station 13 along the second movement direction "X".

Furthermore, the movement means 11 can be configured to move the at least one gripping head 16 along a movement path given by the simultaneous movement of the gripping head 16 along the first movement direction "Y" and the second movement direction "X".

Advantageously, the movement means 11 may comprise at least one Cartesian robot 22 configured to reversibly move the at least one gripping head 16 at least between the pick-up station 12 and the release station 13 in a particularly efficient manner.

In accordance with some possible embodiments of the present invention, the dispensing apparatus 10 may comprise a plurality of gripping heads 16, for example eight gripping heads 16, activatable on the at least one gadget for binding the at least one gadget to the movement means 11. Furthermore, the movement means 11 can be configured to selectively move each gripping head 16 at least along a first movement direction "Y", preferably a vertical direction, and/or at least a second movement direction "X", preferably a horizontal direction.

Purely by way of non-limiting example, the aforementioned plurality of gripping heads 16 may define a circumferential arrangement of gripping heads 16. Furthermore, the movement means 11 may comprise a plurality of guides, preferably radial guides 23, adapted to allow a movement of the gripping heads 16 along a respective direction, preferably a radial direction. For example, this radial direction can at least partially define the aforementioned second direction "X".

In accordance with a further aspect, the present invention relates to a method for reordering at least one gadget for a gadget dispensing apparatus. In particular, the method comprises the steps of picking up at least one gadget at a pick-up station and determining a quantity of gadgets picked up at the pick-up station.

Furthermore, the method comprises the step of comparing the aforementioned quantity of gadgets with a preset value and, as a function of the match of the quantity of gadgets with the preset value, moving the at least one gadget between the pick-up station and a release station or releasing the at least one gadget at a pick-up station.

In particular, if the quantity of gadgets corresponds to the preset value, the method involves moving the at least one gadget between the pick-up station and a release station. If the quantity of gadgets differs from the preset value, the method involves releasing the at least one gadget at the pick-up station.

Further, the method may comprise the step of releasing the at least one gadget at the release station.

Preferably, at least one step of the method may be performed with the dispensing apparatus 10 in accordance with the previously described.

It can therefore be noted that the present invention achieves the proposed objects by realising a gadget dispensing apparatus for a packaging plant having an increased efficiency compared to the apparatuses of the prior art thanks to the presence of a control unit configured to control the movement means and/or the at least one gripping head at least as a function of the quantity of gadgets picked up by the at least one gripping head.

Advantageously, the present invention allows to select, for example based on the weight of the gadget, the exact number of gadgets to be inserted into the product packages.

## Claims

1. A gadget dispensing apparatus (10) for a packaging plant (100), said dispensing apparatus (10) comprising:
- movement means (11) configured to move at least one gadget between a pick-up station (12) and a release station (13);
- at least one gripping head (16) connected to said movement means (11) and activatable on the at least one gadget for binding the at least one gadget to said movement means (11) at least during a movement between the pick-up station (12) and the release station (13);
- detection means (17) active on said gripping head (16) and configured to generate at least one quantity signal representative of at least the quantity of gadgets bound to said at least one gripping head (16);
- a control unit operatively associated with said detection means (17), said control unit being configured to control said movement means (11) and/or said at least one gripping head (16) at least as a function of said at least one quantity signal;
- at least one support body (14) adapted to support at least one gadget, said support body (14) at least partially defining said at least one pick-up station (12);
- at least one hopper (15) adapted to convey the at least one gadget towards a rephasing system and/or a conveying system and/or a packing system of a packaging plant (100), said at least one hopper (15) defining at least partially said at least one release station (13);
and wherein said at least one hopper (15) is arranged perimetrically, preferably circumferentially, to said support body (14).

2. The dispensing apparatus according to claim 1, wherein said detection means (17) comprises at least one load cell active on the at least one gripping head (16) for generating said at least one quantity signal.

3. The dispensing apparatus according to claim 2, wherein said load cell is at least partially interposed between said gripping head (16) and said movement means (11) for jointly detecting the weight of the gripping head (16) and of the at least one gadget.

4. The dispensing apparatus according to one or more of the preceding claims, wherein said at least one gripping head (16) is reversibly switchable between an active configuration, in which it binds the at least one gadget to the movement means (11), and an inactive configuration in which it does not bind the at least one gadget to the movement means (11); and wherein said control unit is configured to switch said gripping head (16) from said active configuration to said inactive configuration as a function of said at least one quantity signal.

5. The dispensing apparatus according to one or more of the preceding claims, comprising pneumatic means (18) operatively associated with said at least one gripping head (16) for binding the at least one gadget to said movement means (11); and wherein said at least one gripping head (16) comprises at least one activation body (19), preferably a suction cup body, in fluid communication with said pneumatic means (18) and configured to bind the at least one gadget to said at least one gripping head (16) under the action of said pneumatic means (18).

6. The dispensing apparatus according to claim 5, comprising at least one pressure sensor active on said pneumatic means (18) and configured to generate at least one presence signal representative of the presence of at least one gadget bound to said at least one gripping head (16); and wherein said control unit is operatively associated with said at least one pressure sensor in order to control said movement means (11) and/or said at least one gripping head (16) at least as a function of said at least one presence signal.

7. The dispensing apparatus according to claim 6, wherein said pressure sensor is configured to detect the pressure at said pneumatic means (18) and/or said activation body (19) and the control unit is configured to determine the presence of at least one gadget bound to the gripping head (16) as a function of the detected pressure.

8. The dispensing apparatus according to one or more of the preceding claims, wherein said movement means (11) comprises at least one Cartesian robot (22) configured to reversibly move said at least one gripping head (16) at least between the pick-up station (12) and the release station (13).

9. The dispensing apparatus according to one or more of the preceding claims, comprising a plurality of gripping heads (16) activatable on the at least one gadget for binding the at least one gadget to said movement means (11); and wherein said movement means (11) is configured to selectively move each gripping head (16) at least along a first movement direction (Y), preferably a vertical direction, and at least a second movement direction (X), preferably a horizontal direction.

10. The dispensing apparatus according to claim 9, wherein said plurality of gripping heads (16) defines a circumferential arrangement of gripping heads (16); and wherein said movement means (11) comprises a plurality of radial guides (23) adapted to allow a movement of said gripping heads (16) along a respective radial direction.

11. The dispensing apparatus according to one or more of the preceding claims, wherein said control unit is further configured to activate on said at least one gripping head (16) to command the release of the at least one gadget inside said pick-up station (12) if the quantity of gadget detected is greater than a single gadget.

12. The dispensing apparatus according to one or more of the preceding claims, wherein said support body (14) comprises a vibrating plate (20) adapted to support at least one gadget, preferably a plurality of gadgets.

13. The dispensing apparatus according to one or more of the preceding claims, comprising one or more optical sensors or the like adapted to detect the presence of at least one gadget on the support body (14) and operatively associated with said control unit, for example, at least to signal the need to feed at least one gadget to the support body (14).

14. A method for reordering at least one gadget for a gadget dispensing apparatus, said method comprising the steps of:
- picking up at least one gadget at a pick-up station (12);
- determining a quantity of gadgets picked up at said pick-up station (12);
- comparing said quantity of gadgets with a preset value;
- if said quantity of gadgets corresponds to said preset value, moving the at least one gadget between a pick-up station (12) and a release station (13);
- if said quantity of gadgets differs from said preset value, releasing the at least one gadget at a pick-up station (12).

15. The method according to claim 14, wherein at least one of said steps is carried out with a dispensing apparatus (10) according to one or more of claims 1-13.
